# EUROPEAN PATENT SPECIFICATION

(11) **EP 4 416 790 B1**
(45) Date of publication and mention of the grant of the patent: **21.01.2026**
(21) Application number: 23866681.2
(22) Date of filing: 28.12.2023
(51) Int. Cl.: H01M 50/107, H01M 50/50, H01M 50/528, B23K 26/244, H01M 50/545, H01M 50/559, H01M 50/566, H01M 50/571, H01M 50/145, H01M 50/213, H01M 50/502, H01M 50/533, H01M 50/536, H01M 10/04, H01M 50/516

(54) **BATTERY AND BATTERY PACK**
BATTERIE UND BATTERIEPACK
BATTERIE ET BLOC-BATTERIE

(30) Priority: 29.12.2022 CN 202211711381
(43) Date of publication of application: 21.08.2024
(73) Proprietor: Dongguan Amperex Technology Limited, Dongguan, Guangdong 523000 (CN)
(72) Inventor: LIU, Daolin, Dongguan, Guangdong 523000 (CN)
(74) Representative: Icosa
(86) International application number: PCT/CN2023/142865
(87) International publication number: WO 2024/140943

(56) References cited:
- WO-A1-2018/038143
- WO-A1-2022/177355
- CN-A- 101 213 690
- CN-A- 101 213 691
- CN-A- 116 031 546
- CN-U- 202 957 330
- CN-U- 216 698 435
- JP-A- 2003 272 599
- JP-A- 2007 141 673
- JP-A- 2009 302 019
- US-A1- 2008 166 630
- "Sheet Metal of Automobiles", 28 February 2015, UNIVERSITY OF ELECTRONIC SCIENCE AND TECHNOLOGY OF CHINA PRESS, CN, ISBN: 978-7-5647-2817-5, article YU, SHUHONG: "Passage ", pages: 76, XP009558423

## Description

### TECHNICAL FIELD

This application relates to the field of battery technology, and in particular, to a cylindrical battery and a battery pack.

### BACKGROUND

A cell current collecting disc usually needs to be disposed in a cylindrical battery, and an effective electrical connection is formed between the current collecting disc and a housing of the battery to implement a function of electronic conduction. The current collecting disc is connected to the housing mostly by resistance welding, laser welding, and other means. Welding positions are usually located at the bottom of the battery. The resistance welding is prone to problems such as cold solder joint and much welding slag. Moreover, during chemical formation or voltage test, the weld marks of the laser welding and the resistance welding affect the contact between a probe and the battery. After being used for a long time, the battery is prone to the problem of corrosion and rusting due to exposure of the welding track in the air. Documents WO2022/177355 and US2008/166630 disclose example of cylindrical batteries with welding tracks at the bottom.

### SUMMARY

This application provides a cylindrical battery and a battery pack to alleviate the problem of interference caused by weld marks to a probe or a bus plate and the problem of the welding track being prone to corrosion and rust.

According to a first aspect of this application, a cylindrical battery is provided, including: a housing, an electrode assembly, a first current collecting disc, and a protection piece. The housing contains a first end portion. The electrode assembly is accommodated in the housing. The first current collecting disc is electrically connected to the electrode assembly in the housing. The first end portion contains several welding tracks configured to be connected to the first current collecting disc. The first end portion further contains a first surface oriented away from the first current collecting disc. On the first surface, the welding track are arranged away from a center of the first surface. The protection piece is sheathed around the housing, extends beyond the first surface, and covers the welding track.

In the above technical solution, the welding track are arranged away from the center of the first surface, and no welding track is arranged at the center of the first surface. The bus plate can be directly electrically connected to the first end portion near the center of the first surface, thereby reducing interference between the welding track and the bus plate, and facilitating electrical connection between the first end portion and the bus plate. In addition, the probe can test the contact with the first end portion near the center of the first surface to reduce the interference between the welding track and the probe. Meanwhile, the protection piece covers the welding track to isolate the welding track from the external environment, effectively reduce the contact and reaction between the external moisture and oxygen and the welding track, and in turn, reduce the corrosion and rust at the welding track.

In some embodiments, a distance from the welding track to the center of the first surface is L, and a radius of the first surface is R, satisfying: L/R ≥ 0.5. By setting the distances from all the welding track to the center of the first surface to be greater than 50% of the radius of the first surface, a sufficient area of the first surface is reserved for being contacted by a charging probe or a discharging probe or for convenience of welding to the bus plate.

Optionally, 0.7 ≤ L/R ≤ 0.98. The distances from all the welding track to the center of the first surface are less than 98% of the radius of the first surface, thereby reducing the interference caused by the chamfer of the housing to the welding track to ensure stable welding between the first end portion and the first current collecting disc. Meanwhile, the distances from all the welding track to the center of the first surface are greater than 70% of the radius of the first surface, thereby reserving an area large enough, and facilitating electrical connection between the first end portion and the probe as well as the welding to the bus plate.

On the first surface, a distance from the protection piece to the center of the first surface is M, satisfying: 0.5 mm ≤ L - M ≤ 10 mm, thereby further ensuring isolation of the weld tracks from the external environment to reduce the risk of corroding the weld spots.

A sum of areas of the welding track is S₁, satisfying: 0.2 mm² ≤ S₁ ≤ 0.8 mm². Setting a lower limit of the sum of the areas of the welding track to 0.2 mm² can effectively ensure a sufficient flow area and reduce the temperature increment of the battery while meeting the welding strength requirement of the battery. Setting an upper limit of the sum of the areas of the welding track to 0.8 mm² ensures that the welding track are covered by the protection piece while ensuring simplicity of the welding process, thereby reducing the risk of corroding the welding track.

In some embodiments, a sum of areas of the welding track is S₁, and an area of the first surface is S₂, satisfying: 5% ≤ S₁/S₂ ≤ 10%. Such a value range can effectively ensure a sufficient flow area, and reduce the temperature increment of the battery while meeting the welding strength requirement of the battery.

In some embodiments, the first surface includes a first region and a second region. The center of the first surface is located in the first region. The second region is arranged around the first region. All the several welding tracks are located in the second region. The protection piece covers the second region and the protection piece does not cover the first region. The first region is configured to be electrically connected to a bus plate. The first region can be configured to be electrically connected to external circuits such as a probe or the bus plate, thereby making the electrical connection more convenient because the interference of the welding track is avoided.

In some embodiments, the first end portion contains at least two welding tracks. Each welding track contains a starting end and an ending end. A sum of angles is α, and α is greater than 180°, where each angle is formed by lines that connect the starting end and the ending end of a welding track respectively to the center of the first surface. This structure ensures a sufficient welding area between the first end portion and the first current collecting disc, and the welding track occupy at least a half of the circumferential direction of the first end portion, so as to ensure stable welding between the first end portion and the first current collecting disc.

In some embodiments, each of the welding track includes a plurality of welding wires. The plurality of welding wires of each welding track are arranged in sequence along a direction from the center of the first surface to the second region. This arrangement ensures stability of the welding between the first end portion and the first current collecting disc. The arrangement of the plurality of welding wires increases the flow area and reduces the temperature increment of the battery caused by the flow of an electrical current.

According to a second aspect, this application further discloses a battery pack. The battery pack includes a bus plate and several batteries according to any one of the above embodiments. The bus plate is electrically connected to the first end portion of the several batteries.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### DETAILED DESCRIPTION

To describe the technical solutions of the embodiments of this application more clearly, the following outlines the drawings used in the embodiments of this application. Evidently, the drawings outlined below are merely a part of embodiments of this application. A person of ordinary skill in the art may derive other drawings from the outlined drawings.
FIG. 1 is an exploded view of a battery according to some embodiments of this application;
FIG. 2 is a cross-sectional view of a battery according to some embodiments of this application;
FIG. 3 is a cross-sectional view of a housing according to some embodiments of this application;
FIG. 4 is a schematic diagram of a bottom structure of a battery according to some embodiments of this application;
FIG. 5 is a schematic diagram of a bottom structure of a battery according to some embodiments of this application;
FIG. 6 is a schematic diagram of a bottom structure of a battery according to some embodiments of this application;
FIG. 7 is a schematic diagram of a bottom structure of a battery according to some embodiments of this application;
FIG. 8 is a schematic diagram of a bottom structure of a battery according to some embodiments of this application;
FIG. 9 is a schematic diagram of a bottom structure of a battery and a close-up view of a part A according to some embodiments of this application;
FIG. 10 is an exploded view of a battery according to some embodiments of this application; and
FIG. 11 is a schematic structural diagram of a battery according to some embodiments of this application.

List of reference numerals:
100. cylindrical battery;
10. housing; 11. accommodation cavity; 12. opening; 13. first end portion;
131. first surface; 1311. first region; 1312. second region; 132. welding track; 132a. first welding track; 132b. second welding track; 132c. third welding track; 133. chamfer; 1321. welding wire; 14. body portion;
20. electrode assembly;
30. first current collecting disc;
40. protection piece;
50. second end portion; 51. electrode post;
60. second current collecting disc

### DETAILED DESCRIPTION OF EMBODIMENTS

For ease of understanding this application, the following describes this application in more detail with reference to drawings and specific embodiments. In the description of the embodiments of this application, unless otherwise expressly specified and defined, the technical terms such as "mounting", "concatenation", "connection", and "fixing" need to be understood in a broad sense, for example, understood as a fixed connection or a detachable connection or integrally formed; or understood as a mechanical connection or an electrical connection; understood as a direct connection, or an indirect connection implemented through an intermediary; or understood as internal communication between two components or interaction between two components.

In the description of embodiments of this application, a directional or positional relationship indicated by the terms such as "center," "length", "width", "thickness", "up", "down", "top", "bottom", "in", "out", and "circumferential" is a directional or positional relationship based on the illustration in the drawings, and is merely intended for ease or brevity of describing some embodiments of this application, but not intended to mean or imply that the indicated device or component is necessarily located in the specified direction/position or constructed or operated in the specified direction/position. Therefore, such terms are not to be understood as a limitation on embodiments of this application.

In the description of the embodiments of this application, the technical terms "first" and "second" are merely intended to distinguish between different items but not intended to indicate or imply relative importance or implicitly specify the number of the indicated technical features, specific order, or order of precedence.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. In addition, to the extent that no mutual conflict occurs, the technical features described below in different embodiments of this application may be combined with each other.

Unless otherwise defined, all technical and scientific terms used herein bear the same meanings as what is normally understood by a person skilled in the technical field of this application. The terms used in the specification of this application are merely intended to describe specific embodiments but not to limit this application.

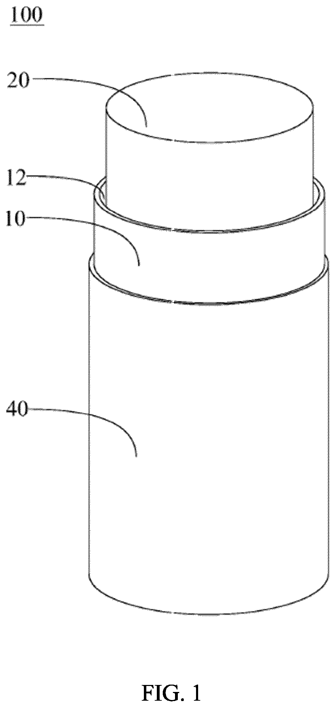

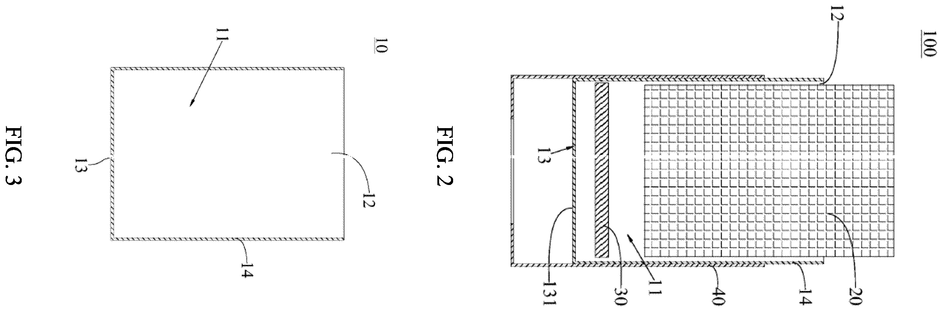

According to a first aspect, this application discloses a cylindrical battery 100. Referring to FIG. 1 and FIG. 2, the battery 100 includes: a housing 10, an electrode assembly 20, a first current collecting disc 30, and a protection piece 40.

For the housing 10, referring to FIG. 1 to FIG. 3, the housing 10 may be in a cylindrical shape, a prismatic shape, or a polygonal shape, or the like. Taking a cylindrical housing 10 as an example, the housing 10 may accommodate the electrode assembly 20 and an electrolyte solution (not shown in the drawing). The opening 12 is created at the upper end of the housing 10. A hermetically closed first end portion 13 is disposed at the lower end of the housing. The electrode assembly 20 and the first current collecting disc 30 may be accommodated in the housing 10 through the opening 12. Optionally, the housing 10 includes a body portion 14 and a first end portion 13. The body portion 14 is in the form of a vertically through cylinder. The first end portion 13 is connected to the bottom of the body portion 14 by welding, bonding, snap-fastening, or other means. In some other embodiments, the first end portion 13 may be formed together with the body portion 14 in one piece to ensure the overall strength of the housing 10.

In this embodiment, the housing 10 may be a structure formed by die-cutting one layer of metal sheet. The thickness of the metal sheet may be set to 0.1 to 0.4 mm to ensure the die-cutting strength of the housing 10. The metal sheet may be made of a conductive metal material such as aluminum, steel, stainless steel, nickel, copper, or magnesium alloy. In this way, the housing 10 can lead out a polarity of the battery 100. For example, the housing 10 itself is used as a positive or negative electrode of the battery 100.

For the electrode assembly 20, referring to FIG. 1 and FIG. 2, the electrode assembly 20 is accommodated in the housing 10. The electrode assembly 20 includes a separator (not shown in the drawings) as well as a first electrode plate (not shown in the drawings) and a second electrode plate (not shown in the drawings) that are of opposite polarities. The separator is disposed between the first electrode plate and the second electrode plate to separate the two electrode plates. The first electrode plate is connected to a first tab (not shown in the drawings) to lead out the polarity of the first electrode plate. The second electrode plate is connected to a second tab (not shown in the drawings) to lead out the polarity of the second electrode plate. The first electrode plate and the second electrode plate are stacked, or the first electrode plate and the second electrode plate are stacked and then wound. In an example in which the first electrode plate and the second electrode plate are stacked and then wound, in order to increase the flow area of the battery 100 and increase the charge rate and discharge rate of the battery 100, the first electrode plate is connected to a first tab, and the second electrode plate is connected to a second tab. The first tab extends out of the lower end of the electrode assembly 20, and the second tab extends out of the upper end of the electrode assembly 20, thereby causing the polarity of the upper end to be opposite to the polarity of the lower end of the electrode assembly 20.

For the first current collecting disc 30, referring to FIG. 2, the first current collecting disc 30 is electrically connected to the electrode assembly 20 in the housing 10. During mounting, the first current collecting disc 30 may be accommodated in the housing 10 through the opening 12 of the housing 10, and then the electrode assembly 20 may be accommodated in the housing 10. In this way, the first current collecting disc 30 is located between the first end portion 13 of the housing 10 and the electrode assembly 20, thereby making it convenient for the first current collecting disc 30 to electrically connect the first end portion 13 and the electrode assembly 20.

To further facilitate the electrical connection between the electrode assembly 20 and the first current collecting disc 30, the first tab at the lower end of the electrode assembly 20 is kneaded flat to form a flattened face. The first current collecting disc 30 may be directly snugly connected to the flattened face. This design not only increases the flow area, but also facilitates the electrical connection between the first current collecting disc 30 and the electrode assembly 20.

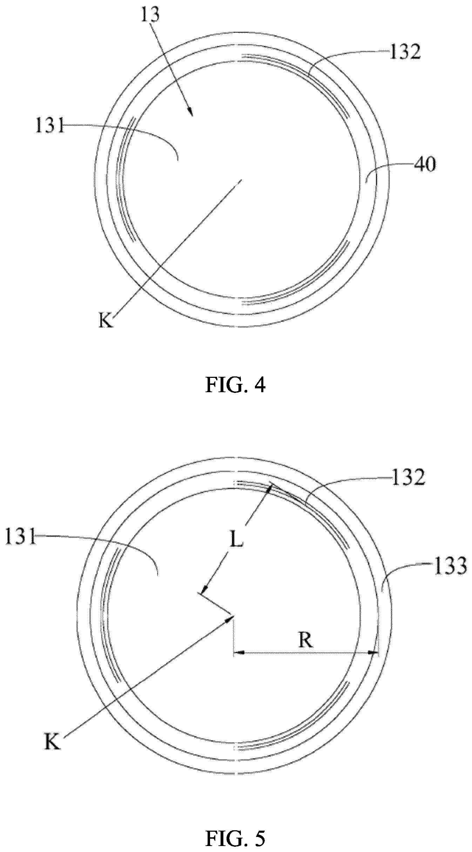

To facilitate fixing of the first current collecting disc 30 to the housing 10, the first current collecting disc 30 may be welded to the first end portion 13. For example, still referring to FIG. 4, the first end portion 13 contains several welding tracks 132 configured to be connected to the first current collecting disc 30. The first end portion 13 is electrically connected to the first current collecting disc 30 by penetration welding at the welding track 132. In this way, the first current collecting disc 30 and the first end portion 13 are fixed to each other and electrically connected to each other. That is, the first end portion 13 leads out one polarity of the electrode assembly 20. The welding track 132 is a welding track formed during welding. The first end portion 13 may be connected to an external circuit, for example, electrically connected to a bus plate (not shown in the drawing) or a probe (not shown in the drawing). In some embodiments, the first end portion 13 further contains a first surface 131 oriented away from the first current collecting disc 30. The welding track 132 are arranged away from the center K of the first surface 131. No welding track 132 is arranged at the center K of the first surface 131. The bus plate can be directly electrically connected to the first end portion 13 near the center K of the first surface 131, thereby reducing interference between the welding track 132 and the bus plate, and facilitating electrical connection between the first end portion 13 and the bus plate. In addition, the probe can test the contact with the first end portion 13 near the center K of the first surface 131 to reduce the interference between the welding track 132 and the probe.

For the protection piece 40, referring to FIG. 1 and FIG. 2, the protection piece 40 is sheathed around the housing 10. For example, the protection piece 40 may be a heat-shrinkable film. The heat-shrinkable film is sheathed on an outer surface of a cylindrical body portion 14. By being heated up, the heat-shrinkable film can be sheathed tightly on the outer surface of the body portion 14 to protect the body portion 14. A part of the protection piece 40 extends beyond the first surface 131 of the first end portion 13, and the protection piece 40 covers the welding track 132 on the first surface 131. By heating the protection piece 40, the protection piece 40 on the first surface 131 can closely fit the welding track 132. In this way, the welding track 132 are isolated from the external environment, thereby effectively reducing the contact between the external air and the welding track 132, and in turn, reducing the corrosion and rust at the welding track 132.

In some embodiments, taking a cylindrical housing 10 as an example, referring to FIG. 5, a distance from the welding track 132 to the center K of the first surface 131 is L, and a radius of the first surface 131 is R, satisfying: L/R ≥ 0.5. When the welding track of the welding track 132 is a straight line or a plurality of weld joints that form a straight line, the distance L from the welding track 132 to the center K of the first surface 131 is a vertical distance from the center K to the straight line. By setting the distances from all the welding track 132 to the center K of the first surface 131 to be greater than 50% of the radius of the first surface 131, a sufficient area of the first surface 131 is reserved for being contacted by a charging probe or a discharging probe or for convenience of welding to the bus plate.

Optionally, in some other embodiments, the L/R ratio satisfies 0.7 ≤ L/R ≤ 0.98. A chamfer 133 may exist at a bottom edge of the cylindrical battery 100 (that is, at the edge of the first end portion 13). The chamfer 133 is smoothly connected to the first surface 131 and a sidewall of the body portion 14. The chamfer 133 reduces interference between the battery 100 and an electronic device as well as scratches on the battery 100 in a process of mounting the battery 100 onto the electronic device. When the location of the welding track 132 is close to the chamfer 133, the fit between the first end portion 13 and the first current collecting disc 30 is prone to be poor, and the problems such as cold solder joints and insufficient tension after welding are prone to occur. Therefore, in these embodiments, the distances from all the welding track 132 to the center K of the first surface 131 are less than 98% of the radius of the first surface 131, thereby reducing the interference caused by the chamfer 133 to the welding track 132 to ensure stable welding between the first end portion 13 and the first current collecting disc 30. Meanwhile, the distances from all the welding track 132 to the center K of the first surface 131 are greater than 70% of the radius of the first surface 131, thereby reserving an area large enough, and facilitating electrical connection between the first end portion 13 and the probe as well as the welding to the bus plate.

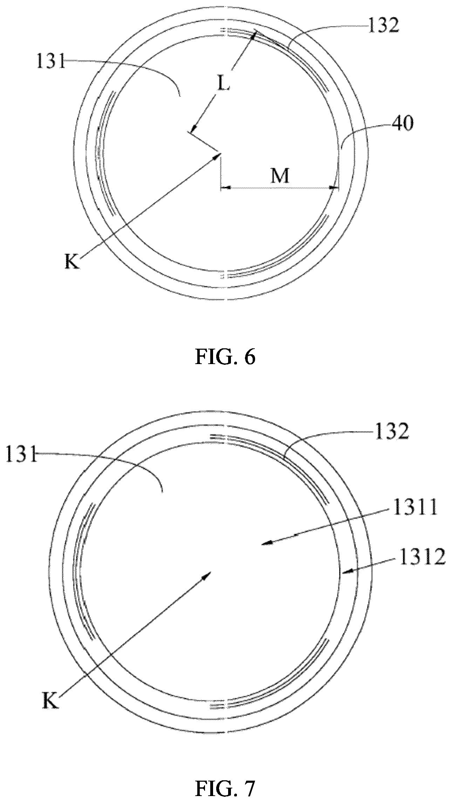

In some embodiments, referring to FIG. 6, on the first surface 131 of the first end portion 13, a distance from the protection piece 40 to the center K of the first surface 131 is M, satisfying: 0.5 mm ≤ L - M ≤ 10 mm. In these embodiments, the protection piece 40 covers the welding track 132, and a space of 0.5 mm to 10 mm is reserved, thereby further ensuring isolation of the weld spots 132 from the external environment to reduce the risk of corroding the weld spots 132.

In some embodiments, a sum of areas of the welding track 132 is S₁, satisfying: 0.2 mm² ≤ S₁ ≤ 0.8 mm². A small welding area between the first end portion 13 and the first current collecting disc 30 leads to an insufficient flow area, heat is prone to be intense at a local point, and the temperature increment of the entire battery 100 is prone to be high. A large contact area between the first end portion 13 and the first current collecting disc 30 can easily increase the welding tension between the first end portion 13 and the first current collecting disc 30. The larger the welding area, the smaller the temperature increment caused by an electrical current between the first end portion 13 and the first current collecting disc 30. In these embodiments, the sum of the areas of the welding track 132 is set to at least 0.2 mm², thereby effectively ensuring a sufficient flow area and reducing the temperature increment of the battery while meeting the welding strength requirement of the battery.

However, a large welding area not only complicates the welding process, but also makes it difficult for the electrolyte solution to pass through the first current collecting disc 30, and makes it more difficult to let the free electrolyte solution infiltrate the electrode assembly 20. Therefore, in these embodiments, the sum of the areas of the welding track 132 is set to at most 0.8 mm², thereby ensuring that the electrolyte solution can easily infiltrate the electrode assembly 20 while ensuring simplicity of the welding process.

With respect to calculation of the areas of the welding track 132, the calculation may be performed differently depending on the shape of the welding track 132. For example, when the welding track 132 are rectilinear, the total area S₁ of the welding track 132 is equal to nCW, where n is the number of welding track 132, C is the length of a single welding track 132, and W is the width of a single welding track 132. Alternatively, when the welding track 132 is arc-shaped, the total area S₁ of the welding track 132 is equal to [nθπ(R₁ - R₂)]/360, where n is the number of welding track 132, θ is the angle corresponding to the welding track 132, R₁ is the radius of an outer arc of the welding track 132, and R₂ is the radius of an inner arc of the welding track 132.

In some other embodiments, the sum of the areas of the welding track 132 is S₁, the area of the first surface 131 is S₂, and the areas satisfy: 5% ≤ S₁/S₂ ≤ 10%. This value range can effectively ensure a sufficient flow area and reduce the temperature increment of the battery while meeting the welding strength requirement of the battery.

In some embodiments, referring to FIG. 2 and FIG. 7, the first surface 131 includes a first region 1311 and a second region 1312. The center K of the first surface 131 is located in the first region 1311. The second region 1312 is arranged around the first region 1311, thereby causing the second region 1312 to be annular. All the several welding tracks 132 may be disposed in the second region 1312. The protection piece 40 extends beyond the second region 1312 from the outer surface of the body portion 14, and covers the second region 1312. At the same time, the protection piece 40 does not cover the first region 1311. Therefore, the first region 1311 can be configured to be electrically connected to external circuits such as a probe or a bus plate, thereby making the electrical connection more convenient because the interference of the welding track 132 is avoided.

In some embodiments, the first end portion 13 contains at least two welding tracks 132. At least two welding tracks 132 are arranged around the center K of the first surface 131. Each welding track 132 contains a starting end and an ending end. A sum of angles is α, and α is greater than 180°, where each angle is formed by lines that connect the starting end and the ending end of a welding track 132 respectively to the center K of the first surface 131. For example, the first end portion 13 contains three welding tracks 132: a first welding track 132a, a second welding track 132b, and a third welding track 132c. The angle formed by the lines that connect the starting end and the ending end of the first welding track 132a respectively to the center K of the first surface 131 is α₁, the angle formed by the lines that connect the starting end and the ending end of the second welding track 132b respectively to the center K of the first surface 131 is α₂, the angle formed by the lines that connect the starting end and the ending end of the third welding track 132c respectively to the center K of the first surface 131 is α₃, and α = α₁ + α₂ + α₃ > 180°. This structure ensures a sufficient welding area between the first end portion 13 and the first current collecting disc 30, and the welding track 132 occupy at least a half of the circumferential direction of the first end portion 13, so as to ensure stability of welding between the first end portion 13 and the first current collecting disc 30.

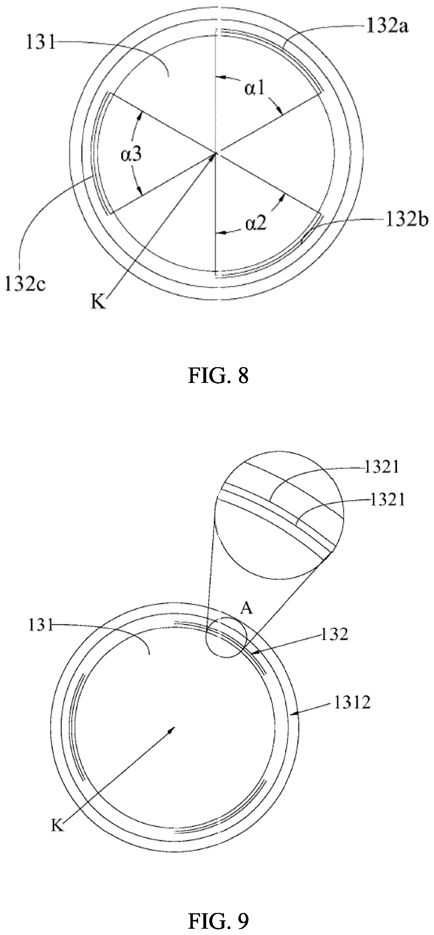

Optionally, in some embodiments, referring to FIG. 8 and FIG. 9, each of the welding track 132 includes a plurality of welding wires 1321. The plurality of welding wires 1321 of each welding track 132 are arranged in sequence along a direction from the center K of the first surface 131 to the second region 1312. By disposing a plurality of welding wires 1321 and arranging the plurality of welding wires 1321 in sequence, the stability of the welding between the first end portion 13 and the first current collecting disc 30 can be improved. The arrangement of the plurality of welding wires 1321 increases the flow area and reduces the temperature increment of the battery 100 caused by the flow of an electrical current.

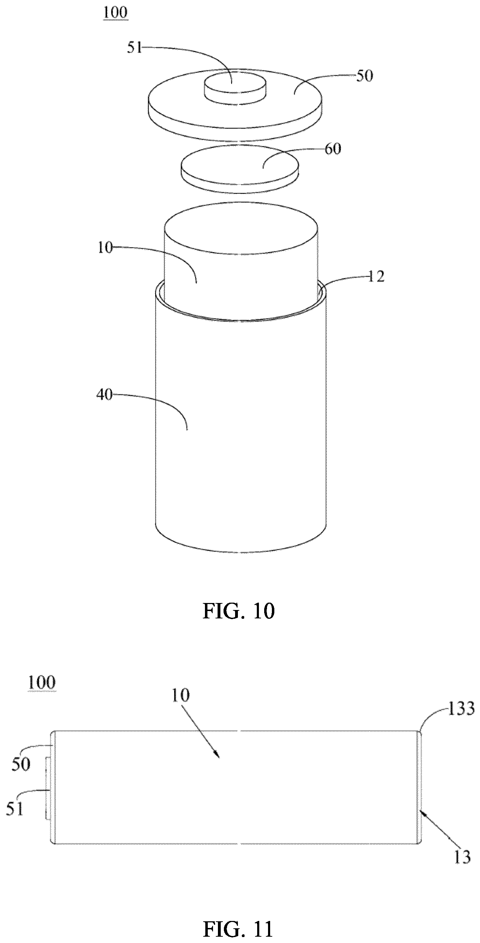

In some other embodiments, referring to FIG. 10 and FIG. 11, the battery 100 further includes a second end portion 50 and a second current collecting disc 60.

For the second current collecting disc 60, the second current collecting disc 60 is accommodated in the housing 10, and the second current collecting disc 60 is electrically connected to the electrode assembly 20. For example, the first current collecting disc 30 leads out a negative electrode of the electrode assembly 20, and the second current collecting disc 60 leads out a positive electrode of the electrode assembly 20. In some other embodiments, the first current collecting disc 30 may lead out the positive electrode of the electrode assembly 20, and the second current collecting disc 60 may lead out the negative electrode of the electrode assembly 20. During mounting, the first current collecting disc 30 and the electrode assembly 20 are accommodated in the housing 10, and then the second current collecting disc 60 is disposed at the upper end of the electrode assembly 20. The second tab at the upper end of the electrode assembly 20 is kneaded flat to form a flattened face. The second current collecting disc 60 is snugly connected to the flattened face at the upper end of the electrode assembly 20. This design not only increases the flow area, but also facilitates the electrical connection between the second current collecting disc 60 and the electrode assembly 20.

For the second end portion 50, referring to FIG. 10 and FIG. 11, the second end portion 50 may cover an opening 12 at the upper end of the housing 10, and hermetically seal the opening 12. The second end portion 50 is similar to the first end portion 13. The second end portion 50 is configured to be welded to the second current collecting disc 60. Several welding tracks 132 may be disposed on the second end portion 50. The welding tracks 132 may be designed in a way similar to the design of the welding track 132 on the first end portion 13, so as to ensure stability of the welding between the second end portion 50 and the second current collecting disc 60. In addition, an electrode post 51 may be disposed on the second end portion 50. The electrode post 51 is configured to be electrically connected to the second current collecting disc 60 to lead out the polarity of the second current collecting disc 60. In addition, an injection port (not shown in the drawing) may be created on the second end portion 50. The electrolyte solution may be directly passed into the housing 10 through the injection port.

In some embodiments of this application, a welding strength test, a temperature increment test, and a salt spray test are performed on different types of batteries 100 that vary depending on whether the welding track 132 are located at the center of the first surface 131, whether the protection piece 40 covers the welding track 132, and depending on the area of the welding track 132, and the like.

In Embodiment 1, the welding track 132 are arranged away from the center of the first surface 131, a ratio of a distance between the welding track 132 and the center of the first surface 131 to the radius of the first surface 131 is 80%, the total area of the welding track 132 is 0.8 mm², and the protection piece 40 covers the welding track 132.

In Embodiment 2, unlike Embodiment 1, the total area of the welding track 132 is 0.2 mm².

In Embodiment 3, unlike Embodiment 1, the total area of the welding track 132 is 0.4 mm².

In Embodiment 4, unlike Embodiment 1, the total area of the welding track 132 is 0.6 mm².

In Embodiment 5, unlike Embodiment 1, the total area of the welding track 132 is 0.1 mm².

In Embodiment 6, unlike Embodiment 1, the ratio of the distance between the welding track 132 and the center of the first surface 131 to the radius of the first surface 131 is 50%.

In Embodiment 7, unlike Embodiment 6, the ratio of the distance between the welding track 132 and the center of the first surface 131 to the radius of the first surface 131 is *55%.*

In Embodiment 8, unlike Embodiment 6, the ratio of the distance between the welding track 132 and the center of the first surface 131 to the radius of the first surface 131 is 65%.

In Embodiment 9, unlike Embodiment 6, the ratio of the distance between the welding track 132 and the center of the first surface 131 to the radius of the first surface 131 is 70%.

In Embodiment 10, unlike Embodiment 6, the ratio of the distance between the welding track 132 and the center of the first surface 131 to the radius of the first surface 131 is 80%.

In Embodiment 11, unlike Embodiment 6, the ratio of the distance between the welding track 132 and the center of the first surface 131 to the radius of the first surface 131 is 98%.

In Embodiment 12, unlike Embodiment 6, the ratio of the distance between the welding track 132 and the center of the first surface 131 to the radius of the first surface 131 is 99%.

In Comparative Embodiment 1, the welding track 132 are disposed at the center of the first surface 131, the total area of the welding track 132 is 0.8 mm², and the protection piece 40 does not cover the welding track 132.

In Comparative Embodiment 2, unlike Comparative Embodiment 1, the ratio of the distance between the welding track 132 and the center of the first surface 131 to the radius of the first surface 131 is 80%.

The test methods are as follows:
Welding tension test: Shearing off the entirety of the welded housing 10 (the first end portion 13) and the first current collecting disc 30, using one end of a versatile tensile testing machine to clamp the housing 10, using the other end of the testing machine to clamp the first current collecting disc 30 (by means of a special-purpose jig), stretching the sample at a typical speed of 50 mm/min to test the tensile force, and obtaining a break tension value F when the sample is snapped off.

Temperature increment test: Placing the battery 100 in a 25 °C thermostat, affixing a thermocouple wire to the surface of the battery 100, and discharging the battery at a 2 C rate to test the temperature increment.

Salt spray test: Preparing a salt solution in a test chamber in which the temperature is 35±1 °C, the concentration of the salt solution is 5%±0.1% (m/m), and the pH of the salt solution is 6.5 to 7.2; and leaving the sample to be in the salt solution for 24 hours, and observing the degree of corrosion at the welding wire 1321.

The test results are shown in Table 1 below.

**Table 1**

| | Location of welding track | Ratio of distance between welding track and center of first surface to radius of first surface | Total area of welding track (mm²) | Welding wire covered by protection piece or not | Welding strength (tensile force F) | Temperature increment (discharging at 2 C) | Degree of corrosion (salt spray test) |
|---|---|---|---|---|---|---|---|
| Embodiment 1 | Periphery | 80% | 0.8 | Covered | 22.3 N | 40 °C | Not yellowing |
| Embodiment 2 | Periphery | 80% | 0.2 | Covered | 8.5 N | 65 °C | Not yellowing |
| Embodiment 3 | Periphery | 80% | 0.4 | Covered | 14.2 N | 58 °C | Not yellowing |
| Embodiment 4 | Periphery | 80% | 0.6 | Covered | 19.5 N | 51 °C | Not yellowing |
| Embodiment 5 | Periphery | 80% | 0.1 | Covered | 7.3 N | 75 °C | Not yellowing |
| Embodiment 6 | Periphery | 50% | 0.8 | Covered | 22.3 N | 40 °C | Slightly yellowing |
| Embodiment 7 | Periphery | 55% | 0.8 | Covered | 22.3 N | 40 °C | Slightly yellowing |
| Embodiment 8 | Periphery | 65% | 0.8 | Covered | 22.3 N | 40 °C | Slightly yellowing |
| Embodiment 9 | Periphery | 70% | 0.8 | Covered | 22.8 N | 40 °C | Not yellowing |
| Embodiment 10 | Periphery | 80% | 0.8 | Covered | 22.3 N | 40 | Not yellowing |
| Embodiment 11 | Periphery | 98% | 0.8 | Covered | 22.6 N | 40 °C | Not yellowing |
| Embodiment 12 | Periphery | 99% | 0.8 | Covered | 6 N | 55 °C | Not yellowing |
| Comparative Embodiment 1 | Center | - | 0.8 | Not covered | 22.3 N | 40 °C | Severely yellowing |
| Comparative Embodiment 2 | Periphery | 80% | 0.8 | Not covered | 22.3 N | 40 °C | Severely yellowing |

As can be seen from Table 1 above, when the total area of the welding track 132 is 0.2 mm² to 0.8 mm², the temperature increment of the battery 100 is relatively small, and the welding strength between the first end portion 13 and the first current collecting disc 30 is caused to be relatively high. In addition, when the welding track 132 are disposed on the periphery of the first surface 131 and the protection piece 40 covers the welding track 132, the degree of corrosion of the welding track 132 is relatively low. Therefore, in some embodiments of this application, the total area of the welding track satisfies 0.2 mm² ≤ S₁ ≤ 0.8 mm², and the protection piece 40 covers the welding track 132, that is, 0.5 mm ≤ L - M ≤ 10 mm.

In some embodiments of this application, the welding track 132 are arranged away from the center of the first surface 131, no welding track 132 is arranged at the center of the first surface 131, and the bus plate can be directly electrically connected to the first end portion 13 near the center of the first surface 131, thereby reducing interference between the welding track 132 and the bus plate, and facilitating electrical connection between the first end portion 13 and the bus plate. In addition, the probe can test the contact with the first end portion 13 near the center of the first surface 131 to reduce the interference between the welding track 132 and the probe. Meanwhile, the protection piece 40 covers the welding track 132 to isolate the welding track 132 from the external environment, effectively reduce the contact and reaction between foreign matters such as external moisture and oxygen and the welding track 132, and in turn, reduce the corrosion and rust at the welding track 132.

According to a second aspect, this application further discloses a battery pack. The battery pack includes a bus plate and several batteries according to any one of the above embodiments. The bus plate is electrically connected to the first end portion of the several batteries separately.

According to a third aspect, this application further discloses an electronic device. The electronic device includes the battery or battery pack according to any one of the embodiments described above. The electronic device is not particularly limited in this application, and may be any electronic device known in the prior art. For example, the electronic device includes, but is not limited to, a Bluetooth headset, a mobile phone, a tablet, a notebook computer, an electric toy, an electric tool, an electric power cart, an electric vehicle, a ship, a spacecraft, and the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like.

It is hereby noted that although preferred embodiments of this application have been given in the specification and drawings of this application, this application may be implemented in many different forms, without being limited to the embodiments described herein. The embodiments are not intended to limit the content of this application, but merely to facilitate thorough and comprehensive understanding of the content disclosed herein.

## Claims

1. A cylindrical battery (100), comprising:
a housing (10), having a first end portion (13);
an electrode assembly (20), accommodated in the housing (10);
a first current collecting disc (30), wherein the first current collecting disc (30) is electrically connected to the electrode assembly (20) in the housing (10); at least one welding track (132) is provided on the first end portion and the at least one welding track (132) is configured to be connected to the first current collecting disc (30), and the first end portion (13) further contains a first surface (131) oriented away from the first current collecting disc (30); and, on the first surface (131), the at least one welding track (132) are arranged at a first distance from a center of the first surface (131); and,
**characterized in that** the cylindrical battery (100) further comprises a protection piece (40), covering the welding track (132); on the first surface (131), a distance from the protection piece to the center of the first surface (131) is M, the first distance is L, and, 0.5 mm ≤ L - M ≤ 10 mm; and a sum of areas of the at least one welding track (132) is S₁, and 0.2 mm² ≤ S₁ ≤ 0.8 mm².

2. The cylindrical battery (100) according to claim 1, **characterized in that** a radius of the first surface (131) is R, satisfying: L/R ≥ 0.5.

3. The cylindrical battery (100) according to claim 2, **characterized in that**, 0.7 ≤ L/R ≤ 0.98.

4. The cylindrical battery (100) according to claim 1, **characterized in that** a sum of areas of the at least one welding track (132) is S₁, and an area of the first surface (131) is S₂, satisfying: 5% ≤ S₁/S₂ ≤ 10%.

5. The cylindrical battery (100) according to claim 1, **characterized in that**, the first surface (131) comprises a first region (1311) and a second region (1312), the center of the first surface (131) is located in the first region (1311), the second region (1312) is arranged around the first region (1311), and all of the at least one welding track (132) are located in the second region (1312); and
the protection piece (40) covers the second region (1312) and the protection piece (40) does not cover the first region (1311), and the first region (1311) is configured to be electrically connected to a bus plate.

6. The cylindrical battery (100) according to claim 5, **characterized in that** the at least one track includes a plurality of welding tracks; each welding track (132) has a starting end and an ending end, wherein the each welding track (132) forms an angle at the center of the first surface (131), the angle of the each welding track (132) being formed by lines that connecting the starting end and the ending end of the each welding track (132) respectively to the center of the first surface (131); wherein a sum of the angles of the plurality of welding tracks (132) is α, and α is greater than 180°.

7. The cylindrical battery (100) according to claim 5, **characterized in that** each welding track (132) comprises a plurality of welding wires (1321), and the plurality of welding wires (1321) of each welding track (132) are arranged in sequence along a direction from the center of the first surface (131) to the second region (1312).

8. The cylindrical battery (100) according to claim 1, **characterized in that** the protection piece (40) is sheathed around the housing and the protection piece (40) is a heat-shrinkable film.

9. A battery pack, **characterized in that** the battery pack comprises a bus plate and a plurality of batteries (100), wherein each battery is the battery (100) according to any one of claims 1 to 8, and the bus plate is electrically connected to a first end portion (13) of the plurality of batteries (100).

## Patentansprüche

1. Zylindrische Batterie (100), umfassend:
ein Gehäuse (10), das einen ersten Endabschnitt (13) aufweist;
eine Elektrodenbaugruppe (20), die in dem Gehäuse (10) untergebracht ist;
eine erste Stromabnehmerscheibe (30), wobei die erste Stromabnehmerscheibe (30) elektrisch mit der Elektrodenbaugruppe (20) in dem Gehäuse (10) verbunden ist; mindestens eine Schweißbahn (132) an dem ersten Endabschnitt vorgesehen ist und die mindestens eine Schweißbahn (132) so eingerichtet ist, dass sie mit der ersten Stromabnehmerscheibe (30) verbunden werden kann, und der erste Endabschnitt (13) ferner eine erste Oberfläche (131) beinhaltet, die von der ersten Stromabnehmerscheibe (30) weg ausgerichtet ist; und die mindestens eine Schweißbahn (132) auf der ersten Oberfläche (131) in einem ersten Abstand zu einer Mitte der ersten Oberfläche (131) angeordnet ist; und
**dadurch gekennzeichnet, dass** die zylindrische Batterie (100) ferner ein Schutzstück (40) umfasst, das die Schweißbahn (132) abdeckt; auf der ersten Oberfläche (131) der Abstand von dem Schutzstück zu der Mitte der ersten Oberfläche (131) M istt, der erste Abstand L ist und 0,5 mm ≤ L - M ≤ 10 mm; und die Summe der Flächen der mindestens einen Schweißbahn (132) S₁ ist und 0,2 mm² ≤ S₁ ≤ 0,8 mm².

2. Zylindrische Batterie (100) nach Anspruch 1, **dadurch gekennzeichnet, dass** ein Radius der ersten Oberfläche (131) R ist, der Folgendes erfüllt: L/R ≥ 0,5.

3. Zylindrische Batterie (100) nach Anspruch 2, **dadurch gekennzeichnet, dass** 0,7 ≤ L/R ≤ 0,98.

4. Zylindrische Batterie (100) nach Anspruch 1, **dadurch gekennzeichnet, dass** die Summe der Flächen der mindestens einen Schweißbahn (132) S₁ ist und die Fläche der ersten Oberfläche (131) S₂ ist, die Folgendes erfüllen: 5 % ≤ S₁/S₂ ≤ 10 %.

5. Zylindrische Batterie (100) nach Anspruch 1, **dadurch gekennzeichnet, dass** die erste Oberfläche (131) einen ersten Bereich (1311) und einen zweiten Bereich (1312) umfasst, die Mitte der ersten Oberfläche (131) sich in dem ersten Bereich (1311) befindet, der zweite Bereich (1312) um den ersten Bereich (1311) angeordnet ist und alle der mindestens einen Schweißbahn (132) sich in dem zweiten Bereich (1312) befinden; und
das Schutzstück (40) den zweiten Bereich (1312) abdeckt und das Schutzstück (40) den ersten Bereich (1311) nicht abdeckt, und der erste Bereich (1311) so eingerichtet ist, dass er elektrisch mit einer Busplatte verbunden werden kann.

6. Zylindrische Batterie (100) nach Anspruch 5, **dadurch gekennzeichnet, dass** die mindestens eine Bahn eine Vielzahl von Schweißbahnen enthält; jede Schweißbahn (132) ein Anfangsende und ein Abschlussende aufweist, wobei jede Schweißbahn (132) einen Winkel an der Mitte der ersten Oberfläche (131) bildet, wobei der Winkel jeder Schweißbahn (132) durch Linien gebildet wird, die das Anfangsende und das Abschlussende jeder Schweißbahn (132) jeweils mit der Mitte der ersten Oberfläche (131) verbinden; wobei eine Summe der Winkel der Vielzahl von Schweißbahnen (132) α ist und α größer als 180° ist.

7. Zylindrische Batterie (100) nach Anspruch 5, **dadurch gekennzeichnet, dass** jede Schweißbahn (132) eine Vielzahl von Schweißdrähten (1321) umfasst und die Vielzahl von Schweißdrähten (1321) jeder Schweißbahn (132) in einer Richtung von der Mitte der ersten Oberfläche (131) zu dem zweiten Bereich (1312) nacheinander angeordnet sind.

8. Zylindrische Batterie (100) nach Anspruch 1, **dadurch gekennzeichnet, dass** das Schutzstück (40) das Gehäuse ummantelt und das Schutzstück (40) eine Wärmeschrumpffolie ist.

9. Batteriepack, **dadurch gekennzeichnet, dass** das Batteriepack eine Busplatte und eine Vielzahl von Batterien (100) umfasst, wobei jede Batterie die Batterie (100) nach einem der Ansprüche 1 bis 8 ist, und die Busplatte elektrisch mit einem ersten Endabschnitt (13) der Vielzahl von Batterien (100) verbunden ist.

## Revendications

1. Une batterie cylindrique (100), comprenant :
un boîtier (10), ayant une première partie d'extrémité (13) ;
un ensemble d'électrodes (20), logé dans le boîtier (10) ;
un premier disque collecteur de courant (30), le premier disque collecteur de courant (30) étant connecté électriquement à l'ensemble d'électrodes (20) dans le boîtier (10) ; au moins une piste de soudage (132) est prévue sur la première partie d'extrémité et l'au moins une piste de soudage (132) est configurée pour être connectée au premier disque collecteur de courant (30), et la première partie d'extrémité (13) contient en outre une première surface (131) orientée à l'opposé du premier disque collecteur de courant (30) ; et, sur la première surface (131), l'au moins une piste de soudage (132) est disposée à une première distance d'un centre de la première surface (131) ; et,
**caractérisée en ce que** la batterie cylindrique (100) comprend en outre une pièce de protection (40), recouvrant la piste de soudage (132) ; sur la première surface (131), une distance de la pièce de protection au centre de la première surface (131) est M, la première distance est L, et 0,5 mm ≤ L - M ≤ 10 mm ; et une somme des surfaces de l'au moins une piste de soudage (132) est S1, et 0,2 mm² ≤ S₁ ≤ 0,8 mm².

2. La batterie cylindrique (100) selon la revendication 1, **caractérisée en ce qu'**un rayon de la première surface (131) est R, satisfaisant : L/R ≥ 0,5.

3. La batterie cylindrique (100) selon la revendication 2, **caractérisée en ce que** 0,7 ≤ L/R ≤ 0,98.

4. La batterie cylindrique (100) selon la revendication 1, **caractérisée en ce qu'**une somme des surfaces de l'au moins une piste de soudage (132) est S1, et une surface de la première surface (131) est S2, satisfaisant : 5 % ≤ S1/S2 ≤ 10 %.

5. La batterie cylindrique (100) selon la revendication 1, **caractérisée en ce que** la première surface (131) comprend une première région (1311) et une deuxième région (1312), le centre de la première surface (131) est situé dans la première région (1311), la deuxième région (1312) est disposée autour de la première région (1311), et toutes les pistes de soudage (132) sont situées dans la deuxième région (1312) ; et
la pièce de protection (40) recouvre la deuxième région (1312) et la pièce de protection (40) ne recouvre pas la première région (1311), et la première région (1311) est configurée pour être connectée électriquement à une plaque collectrice.

6. La batterie cylindrique (100) selon la revendication 5, **caractérisée en ce que** l'au moins une piste comprend une pluralité de pistes de soudage ; chaque piste de soudage (132) a une extrémité de départ et une extrémité de fin, chaque piste de soudage (132) formant un angle au centre de la première surface (131), l'angle de chaque piste de soudage (132) étant formé par des lignes reliant respectivement l'extrémité de départ et l'extrémité de fin de chaque piste de soudage (132) au centre de la première surface (131) ; une somme des angles de la pluralité de pistes de soudage (132) étant α, et α étant supérieur à 180°.

7. La batterie cylindrique (100) selon la revendication 5, **caractérisée en ce que** chaque piste de soudage (132) comprend une pluralité de fils de soudage (1321), et les fils de soudage (1321) de chaque piste de soudage (132) sont disposés en séquence le long d'une direction allant du centre de la première surface (131) vers la deuxième région (1312).

8. La batterie cylindrique (100) selon la revendication 1, **caractérisée en ce que** la pièce de protection (40) est gainée autour du boîtier et la pièce de protection (40) est un film thermorétractable.

9. Un bloc-batterie, **caractérisé en ce que** le bloc-batterie comprend une plaque collectrice et une pluralité de batteries (100), chaque batterie étant la batterie (100) selon l'une quelconque des revendications 1 à 8, et la plaque collectrice étant connectée électriquement à une première partie d'extrémité (13) des batteries (100).
